# NEUE EUROPÄISCHE PATENTSCHRIFT

(11) **EP 3 015 297 B2**
(45) Veröffentlichungstag und Bekanntmachung des Hinweises auf die Entscheidung über den Einspruch: **14.09.2022**
(45) Hinweis auf die Patenterteilung: 05.12.2018
(21) Anmeldenummer: 14190869.9
(22) Anmeldetag: 29.10.2014
(51) Int. Cl.: B60H 3/06, B01D 46/00, B01D 46/52, B01D 46/10

(54) **Anordnung mit einem Filterelement**
Assembly with a filter element
Système doté d'un élément de filtre

(43) Veröffentlichungstag der Anmeldung: 04.05.2016
(73) Patentinhaber: Carl Freudenberg KG, 69469 Weinheim (DE)
(72) Erfinder: Krause, Martin, 637 00 Brno (CZ)

(56) Entgegenhaltungen:
- EP-A1- 2 634 023
- WO-A1-2013/030244
- DE-A1- 4 327 368
- DE-A1-102010 026 101
- DE-A1-102012 012 669
- DE-C1- 19 715 755
- JP-A- H 115 429
- US-A1- 2008 264 259

## Beschreibung

### Technisches Gebiet

Die Erfindung betrifft eine Anordnung nach dem Oberbegriff des Patentanspruchs 1.

### Stand der Technik

Aus der EP 1 778 380 B1 und deren Übersetzung DE 60 2005 003 958 T2 ist bereits ein Filterelement bekannt, bei dem die Faltenkanten mit einem Kantenstreifen gesäumt sind. Solche Filterelemente werden in einer Vielzahl von filtertechnischen Anordnungen verwendet.
Bei einigen Kraftfahrzeugen wird die Kabineninnenluft unter der Windschutzscheibe, nämlich im Wasserkasten, angesaugt. In Gebieten mit hohem Schnee-, Wasser- und Grobstaubaufkommen kann dieser für das Ansaugen vorgesehene Bereich eines Kraftfahrzeugs zugesetzt, insbesondere zugeschneit, werden.
Schnee oder Schmelzwasser kann dann in die Klimaanlage, insbesondere in Richtung eines Filterelements hin, eingesogen werden. Die Klimaanlage kann durch Wassereintritt beschädigt werden.

Um dies zu verhindern, ist es bereits bekannt, ein Vlies einzusetzen, welches in einem Innenraum verbaut wird, Aktivkohle enthalten kann und hinter zu schützenden Bauteilen angeordnet ist. Ein nasses Filterelement befeuchtet jedoch zusätzlich Frischluft und Aktivkohle wird durch Nässe unwirksam.
Aus der JP H 115429 A geht der Einsatz eines schräg montierten Filterelements im Bereich eines Ansaugstutzens zum Abscheiden von Feuchtigkeit hervor. Eine Anordnung gemäß Oberbegriff des Anspruchs 1 mit einem ähnlichen Filter ist in der DE 10 2012 012669 A1 gezeigt. Damit Wasser ablaufen kann sind im Filterrahmen Auslassöffnungen vorgesehen. Damit diese wirksam werden muss der Rahmen relativ zum plissierten Filtermaterial exakt positioniert werden. Auch können die Auslassöffnungen leicht verschmutzen und verstopfen.
Die EP 2 634 023 A1 zeigt bereits ein Filterelement gemäß dem Oberbegriff von Anspruch 1.

### Darstellung der Erfindung

Der Erfindung liegt daher die Aufgabe zu Grunde, Schnee und Wasser, insbesondere Schmelzwasser, so abzuführen, dass sie möglichst nicht in die Klimaanlage eines Kraftfahrzeugs fließen und ein Filterelement möglichst wenig schädigen.
Erfindungsgemäß wird die voranstehende Aufgabe mit den Merkmalen des Patentanspruchs 1 gelöst.
Erfindungsgemäß ist zunächst erkannt worden, dass ein bereits bekanntes Filterelement durch eine geeignete Modifikation zum Schutz eines Ansaugstutzens verwendet werden kann. Das Filterelement schützt den Ansaugstutzen gegen Schnee und Wasser und verhindert konkret, dass der Ansaugstutzen zugeschneit wird. Das modifizierte Filterelement bewirkt nämlich erfindungsgemäß eine geführte Ableitung von Schmelzwasser. Vor diesem Hintergrund ist überraschend festgestellt worden, dass durch das abfließende Schmelzwasser eine Reinigung des Filterelements erfolgt. Durch diesen sogenannten "Cross-Flow-Effekt" werden sehr hohe Standzeiten des Filterelements erreicht. Da das Filterelement mit einer leichten Neigung eingebaut ist, entsteht durch abfließendes Wasser stets der "Cross-Flow"-Effekt, der das Filtermedium reinigt. Dies geschieht beispielsweise auch bei Regen oder bei einer Autowäsche. Insoweit werden Schnee und Wasser, insbesondere Schmelzwasser, so abgeführt, dass sie möglichst nicht in die Klimaanlage eines Kraftfahrzeugs fließen und ein Filterelement möglichst wenig schädigen.

Jeweils auf einer Seite des Faltenbalgs verlaufen Faltenkanten einer zick-zack-Linie folgend, wobei die Faltenkanten auf mindestens einer Seite des Faltenbalgs durch einen Kantenstreifen gesäumt sind und wobei der Kantenstreifen derart an den Faltenkanten angeordnet oder ausgebildet ist, dass aus mindestens einem Faltental Wasser abfließen kann. Hierdurch umfassen die Mittel für den Wasserablauf einen Kantenstreifen, der geeignet angeordnet ist. Der Kantenstreifen stabilisiert den Faltenabstand, dichtet ab und gibt dennoch eine Öffnung für den Wasserablauf frei.
Vor diesem Hintergrund sind die Mittel für den Wasserablauf als V-förmige Öffnungen ausgebildet. Die Höhe dieser Öffnungen ist problemlos über die Breite des Kantenstreifens einstellbar.

Vor diesem Hintergrund ist am Grund mindestens eines Faltentals eine Rinne ausgebildet, die nicht vom Kantenstreifen verschlossen ist. So kann Wasser in relativ großen Mengen abfließen. Die Faltenkanten sind einseitig nicht vollständig von dem Kantenstreifen verschlossen, so dass im unteren Bereich jeder V-förmigen Falte eine Öffnung verbleibt, durch die Schmelzwasser abfließen und in einen Wasserkasten geleitet werden kann. Das hier beschriebene Filterelement wird in Kraftfahrzeugen verwendet, bei denen Frischluft durch den Wasserkasten angesaugt wird. Das Filterelement kann insbesondere zur Filterung der Zuluft einer Klimaanlage verwendet werden.

Durch einen hygrophilen Kantenstreifen, insbesondere einen Kantenstreifen, der aus Polyethylentherephthalat gefertigt ist, tritt Flüssigkeit großflächig aus.

Der Kantenstreifen könnte als Spritzgussbauteil ausgestaltet sein. Bei einem Spritzgießverfahren können Ablauföffnungen für Schmelzwasser gezielt eingebracht werden. Darüber hinaus lässt sich ein Spritzgussbauteil mit einem Ansaugstutzen gut verrasten. Hierzu könnte am Kantenstreifen mindestens ein Rastmittel ausgebildet sein, welches mit einem Gegenstück am Ansaugstutzen formschlüssig oder kraftschlüssig verbindbar ist.

Das Filtermedium könnte einen wasserabweisenden Vliesstoff aufweisen, wobei das Filtermedium ein bis drei Schichten aufweist, wobei das Filtermedium und/ oder mindestens eine Schicht Fasern aus Polyethylentherephthtalat, Polypropylen, Polyamid oder Polyethylen aufweist oder wobei das Filtermedium und/ oder mindestens eine Schicht Mischungen aus den zuvor genannten Fasern aufweist. Durch einen Schichtaufbau kann die Filterwirkung modifiziert werden. Durch die genannten Materialien oder Komponenten kann das Filtermedium geeignet wasserabweisend gestaltet werden. Das Filtermedium könnte vorzugsweise aus wasserabweisendem Vliesstoff bestehen. Die Schicht oder Schichten sind bevorzugt einkomponentig oder jeweils materialeinheitlich ausgebildet.

Der Vliesstoff könnte eine Beschichtung aus Nanofasern aufweisen. Hierdurch können sehr feine Partikel abgeschieden werden.

Der Ansaugstutzen könnte in einem Wasserkasten eines Kraftfahrzeugs angeordnet sein. Das plissierte, nämlich gefaltete, Filterelement könnte derart dimensioniert sein, dass es auf den Ansaugstutzen für die Innenraumzuluft passt, welcher im Wasserkasten des Kraftfahrzeugs angeordnet ist.

Um Verschmutzungen durch Partikel gering zu halten, könnte das Filtermedium vorzugsweise elektrostatisch ungeladen sein.

Das hier beschriebene Filterelement kann gleichzeitig als Vorfilter zum Abscheiden von Grobstaub dienen.

Das hier beschriebene Filterelement kann als "Lifetime"-Bauteil ausgelegt werden oder reinigbar sein. Das Reinigen kann durch Ausblasen oder aktives Auswaschen erfolgen.

Das hier beschriebene Filterelement kann als oder in Kombination mit einem Trägheitsabscheider verwendet werden. So wird eine Trägheitsabscheidung mit dem oben genannten "Cross-Flow"-Effekt kombiniert.

### Kurzbeschreibung der Zeichnung

In der Zeichnung zeigen
Fig. 1
   eine Anordnung mit einem Ansaugstutzen, dessen Lufteingang von einem Filterelement abgedeckt ist,

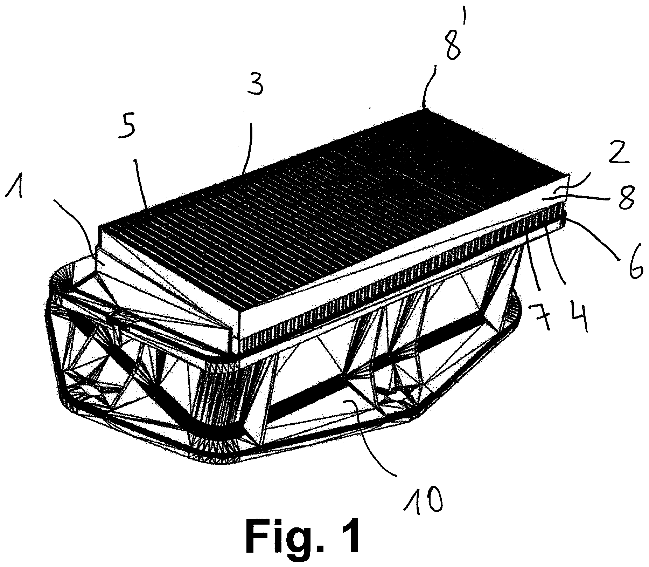

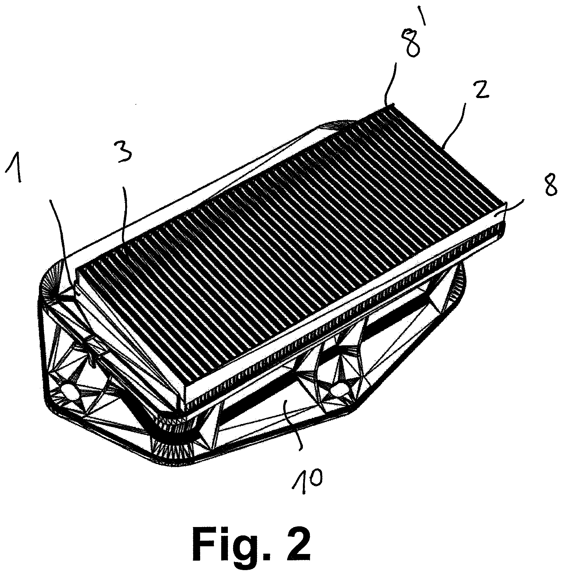

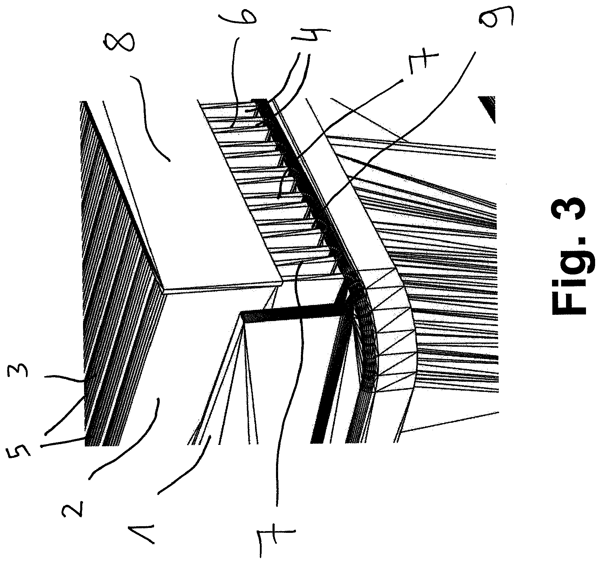

Fig. 2 die Anordnung gemäß Fig. 1 in einer weiteren Ansicht und
Fig. 3
   die Anordnung gemäß Fig. 1 in einer detaillierten Ansicht.

### Ausführung der Erfindung

Fig. 1 zeigt eine Anordnung, umfassend einen Ansaugstutzen 1 mit einem nicht gezeigten Lufteingang für eine Klimaanlage und ein Filterelement 2 mit einem Faltenbalg 3, der Faltentäler 4 und Faltenberge 5 aufweist, wobei das Filterelement 2 ein wasserabweisendes Filtermedium aufweist und wobei das Filterelement 2 den Lufteingang zumindest teilweise abdeckt. Konkret ist dargestellt, dass das Filterelement 2 den Lufteingang vollständig abdeckt.

Das Filterelement 2 reduziert die Luftmenge um etwa 5 - 30 % und ermöglicht eine Abscheidung von Schneeflocken im Größenbereich von 10 µm - 200 µm.

Diese Anordnung ist ein einem nicht gezeigten Kraftfahrzeug verbaut. Der Faltenbalg 3 ist im eingebauten Zustand, nämlich wenn das Kraftfahrzeug auf einer nicht geneigten Ebene steht, gegen die Horizontale unter einem Winkel von 5 - 90° geneigt angeordnet, wobei das Filterelement 2 Mittel 6 für einen Wasserablauf aus den Faltentälern 4 aufweist.

Jeweils auf einer Seite des Faltenbalgs 3 verlaufen Faltenkanten 7 einer zick-zack-Linie oder Wellenlinie folgend, wobei die Faltenkanten 7 auf mindestens einer Seite des Faltenbalgs 3 durch einen Kantenstreifen 8 gesäumt sind und wobei der Kantenstreifen 8 derart an den Faltenkanten 7 angeordnet oder ausgebildet ist, dass aus mindestens einem Faltental 4 Wasser abfließen kann.

Am Grund mindestens eines Faltentals 4 ist eine Rinne 9 ausgebildet, die nicht vom Kantenstreifen 7 verschlossen ist. Insoweit sind die Mittel 6 für einen Wasserablauf als im Querschnitt V-förmige, vom Kantenstreifen 8 nicht verschlossene Öffnungen ausgestaltet.

Das Filtermedium weist einen wasserabweisenden Vliesstoff auf, wobei das Filtermedium ein bis drei Schichten aufweist, wobei das Filtermedium und/ oder mindestens eine Schicht Fasern aus Polyethylentherephthtalat, Polypropylen, Polyamid oder Polyethylen aufweist oder wobei das Filtermedium und/ oder mindestens eine Schicht Mischungen aus den zuvor genannten Fasern aufweist. Konkret ist das Filtermedium aus Polypropylen gefertigt und weist ein Flächengewicht von 105 g/m² auf. Das Filterelement 2 ist 195 mm lang und 110 mm breit. Der Faltenabstand beträgt 10 mm. Ein Faltenabstand zwischen 5 mm und 15 mm ist optimal.

Der Ansaugstutzen 1 ist in einem Wasserkasten 10 des nicht gezeigten Kraftfahrzeugs angeordnet. Ein flexibler Kantenstreifen 8' erstreckt sich entgegen der Fahrtrichtung mit 55 mm Höhe und ist oben bündig. Der flexible Kantenstreifen 8 erstreckt sich in Fahrtrichtung mit 22 mm Höhe und ist ebenfalls oben mit dem Faltenbalg 3 bündig. Die Höhe der frei stehenden Faltentäler 4 beträgt 6 mm, dabei ragen die Faltentäler 4 in den Wasserkasten 10. Insoweit sind die Mittel 6 für einen Wasserablauf als im Querschnitt V-förmige, vom Kantenstreifen 8 nicht verschlossene Öffnungen ausgestaltet. Die Höhe dieser Öffnungen beträgt jeweils 6 mm.

## Patentansprüche

1. Anordnung, umfassend einen Ansaugstutzen (1) mit einem Lufteingang für eine Klimaanlage eines Kraftfahrzeugs und ein Filterelement (2) mit einem Faltenbalg (3), der Faltentäler (4) und Faltenberge (5) aufweist, wobei das Filterelement (2) ein wasserabweisendes Filtermedium aufweist und wobei das Filterelement (2) den Lufteingang zumindest teilweise abdeckt,
wobei der Faltenbalg (3) in eingebautem Zustand gegen die Horizontale unter einem Winkel von 5° - 90°, bevorzugt unter einem Winkel von 15° - 85°, geneigt angeordnet ist, wobei das Filterelement (2) Mittel (6) für einen Wasserablauf aus den Faltentälern (4) aufweist, wobei jeweils auf einer Seite des Faltenbalgs (3) Faltenkanten (7) einer zick-zack-Linie folgend verlaufen, und wobei die Faltenkanten (7) auf mindestens einer Seite des Faltenbalgs (3) durch einen Kantenstreifen (8) gesäumt sind, **dadurch gekennzeichnet, dass** die Mittel (6) als V-förmige Öffnungen ausgebildet sind und, dass der Kantenstreifen (8) derart an den Faltenkanten (7) angeordnet oder ausgebildet ist, dass aus mindestens einem Faltental (4) Wasser abfließen kann und, dass am Grund mindestens eines Faltentals (4) eine Rinne (9) ausgebildet ist, die nicht vom Kantenstreifen (8) verschlossen ist, und dass der Ansaugstutzen (1) in einem Wasserkasten (10) des Kraftfahrzeugs angeordnet ist.

2. Anordnung nach Anspruch 1, **dadurch gekennzeichnet, dass**
der Kantenstreifen (8) als Spritzgussbauteil ausgestaltet ist.

3. Anordnung nach einem der voranstehenden Ansprüche, **dadurch gekennzeichnet, dass**
das Filtermedium einen wasserabweisenden Vliesstoff aufweist, wobei das Filtermedium ein bis drei Schichten aufweist, wobei das Filtermedium und/ oder mindestens eine Schicht Fasern aus Polyethylentherephthtalat, Polypropylen, Polyamid oder Polyethylen aufweist oder wobei das Filtermedium und/ oder mindestens eine Schicht Mischungen aus den zuvor genannten Fasern aufweist.

4. Anordnung nach dem voranstehenden Anspruch, **dadurch gekennzeichnet, dass**
der Vliesstoff eine Beschichtung aus Nanofasern aufweist.

5. Verwendung eines Filterelements (2) in einer Anordnung nach Anspruch 1,
mit einem Faltenbalg (3), der Faltentäler (4) und Faltenberge (5) aufweist, wobei das Filterelement (2) ein wasserabweisendes Filtermedium aufweist, wobei das Filterelement (2) Mittel (6) für einen Wasserablauf aus den Faltentälern (4) aufweist, wobei jeweils auf einer Seite des Faltenbalgs (3) Faltenkanten (7) einer zick-zack-Linie folgend verlaufen, wobei die Faltenkanten (7) auf mindestens einer Seite des Faltenbalgs (3) durch einen Kantenstreifen (8) gesäumt sind, wobei der Kantenstreifen (8) derart an den Faltenkanten (7) angeordnet oder ausgebildet ist, dass aus mindestens einem Faltental (4) Wasser abfließen kann, wobei am Grund mindestens eines Faltentals (4) eine Rinne (9) ausgebildet ist, die nicht vom Kantenstreifen (8) verschlossen ist, und wobei die Mittel (6) als V-förmige Öffnungen ausgebildet sind zur Filterung der Zuluft einer Klimaanlage, wobei der Ansaugstutzen (1) in einem Wasserkasten (10) eines Kraftfahrzeugs angeordnet ist.

## Claims

1. Assembly comprising an intake connector (1), having an air entrance for an air-conditioning system of a motor vehicle, and a filter element (2) having a concertina bellows (3) which has peripheral troughs (4) and peripheral peaks (5), wherein the filter element (2) has a water-repellent filter medium and wherein the filter element (2) at least partially covers the air entrance, wherein in the installed state, the concertina bellows (3) is disposed so as to be inclined at an angle of 5° to 90°, preferably at an angle of 15° to 85°, in relation to the horizontal, wherein the filter element (2) has means (6) for a water outflow from the peripheral troughs (4), wherein fold edges (7) run in each case on one side of the concertina bellows (3) so as to follow a zigzag line, and wherein the fold edges (7) on at least one side of the concertina bellows (3) are bordered by an edge strip (8), **characterized in that** the means (6) are configured as V-shaped openings and **in that** the edge strip (8) is disposed or configured on the fold edges (7) in such a manner that water can flow out from at least one peripheral trough (4), and **in that** a channel (9) which is not closed off by the edge strip (8) is configured on the base of at least one peripheral trough (4), and **in that** the intake connector (1) is disposed in a water box (10) of the motor vehicle.

2. Assembly according to Claim 1, **characterized in that** the edge strip (8) is designed as an injection-moulded component.

3. Assembly according to either of the preceding claims, **characterized in that** the filter medium has a water-repellent non-woven fabric, wherein the filter medium has one to three layers, wherein the filter medium and/or at least one layer has fibres of polyethylene terephthalate, polypropylene, polyamide, or polyethylene, or wherein the filter medium and/or at least one layer has mixtures of the above-mentioned fibres.

4. Assembly according to the preceding claim, **characterized in that** the non-woven fabric has a coating of nanofibres.

5. Use of a filter element (2) in an assembly according to Claim 1, having a concertina bellows (3) which has peripheral troughs (4) and peripheral peaks (5), wherein the filter element (2) has a water-repellent filter medium, wherein the filter element (2) has means (6) for a water outflow from the peripheral troughs (4), wherein fold edges (7) run in each case on one side of the concertina bellows (3) so as to follow a zigzag line, wherein the fold edges (7) on at least one side of the concertina bellows (3) are bordered by an edge strip (8), wherein the edge strip (8) is disposed or configured on the fold edges (7) in such a manner that water can flow out from at least one peripheral trough (4), wherein a channel (9) which is not closed off by the edge strip (8) is configured on the base of at least one peripheral trough (4), and wherein the means (6) are configured as V-shaped openings for filtering the supply air of an air-conditioning system, wherein the intake connector (1) is disposed in a water box (10) of a motor vehicle.

## Revendications

1. Ensemble comportant une tubulure d'aspiration (1) dotée d'une entrée d'air pour un système de climatisation d'un véhicule automobile et un élément de filtre (2) doté d'un soufflet plissé (3) qui comprend des creux de pli (4) et des crêtes de pli (5), l'élément de filtre (2) comprenant un milieu filtrant hydrofuge, et l'élément de filtre (2) recouvrant au moins partiellement l'entrée d'air,
le soufflet plissé (3) étant, à l'état installé, disposé de manière inclinée par rapport à l'horizontale suivant un angle de 5° à 90°, de préférence suivant un angle de 15° à 85°, l'élément de filtre (2) comprenant des moyens (6) servant à une évacuation d'eau hors des creux de pli (4), des bords de pli (7) s'étendant de manière à suivre une ligne en zigzag respectivement sur un côté du soufflet plissé (3), et les bords de pli (7) étant bordés par une bande de bord (8) sur au moins un côté du soufflet plissé (3),
**caractérisé en ce que** les moyens (6) sont réalisés sous forme d'ouvertures en forme de V et **en ce que** la bande de bord (8) est disposée ou réalisée au niveau des bords de pli (7) de telle sorte que de l'eau puisse s'écouler hors d'au moins un creux de pli (4), et **en ce qu'**une rigole (9) est formée au fond d'au moins un creux de pli (4), laquelle n'est pas fermée par la bande de bord (8), et **en ce que** la tubulure d'aspiration (1) est disposée dans une boîte à eau (10) du véhicule automobile.

2. Ensemble selon la revendication 1, **caractérisé en ce que**
la bande de bord (8) est conçue comme une pièce moulée par injection.

3. Ensemble selon l'une quelconque des revendications précédentes, **caractérisé en ce que**
le milieu filtrant comprend un non-tissé hydrofuge, le milieu filtrant comprenant d'une à trois couches, le milieu filtrant et/ou au moins une couche comprenant des fibres de polytéréphtalate d'éthylène, de polypropylène, de polyamide ou de polyéthylène, ou le milieu filtrant et/ou au moins une couche comprenant des mélanges des fibres susmentionnées.

4. Ensemble selon la revendication précédente, **caractérisé en ce que**
le non-tissé comprend un revêtement de nanofibres.

5. Utilisation d'un élément de filtre (2) dans un ensemble selon la revendication 1,
comprenant un soufflet plissé (3) qui comprend des creux de pli (4) et des crêtes de pli (5), l'élément de filtre (2) comprenant un milieu filtrant hydrofuge, l'élément de filtre (2) comprenant des moyens (6) servant à une évacuation d'eau hors des creux de pli (4), des bords de pli (7) s'étendant de manière à suivre une ligne en zigzag respectivement sur un côté du soufflet plissé (3), les bords de pli (7) étant bordés par une bande de bord (8) sur au moins un côté du soufflet plissé (3), la bande de bord (8) étant disposée ou réalisée au niveau des bords de pli (7) de telle sorte que de l'eau puisse s'écouler hors d'au moins un creux de pli (4), une rigole (9) étant formée au fond d'au moins un creux de pli (4), laquelle n'est pas fermée par la bande de bord (8), et les moyens (6) étant réalisés sous forme d'ouvertures en forme de V pour filtrer l'air frais d'un système de climatisation, la tubulure d'aspiration (1) étant disposée dans une boîte à eau (10) d'un véhicule automobile.
